# EUROPEAN PATENT APPLICATION

(11) **EP 2 180 454 A1**
(43) Date of publication of application: **28.04.2010**
(21) Application number: 09013285.3
(22) Date of filing: 21.10.2009
(51) Int. Cl.: G08B 21/02, G08B 25/01

(54) **Portable alarm device**

(30) Priority: 21.10.2008 IT PD20080302
(71) Applicant: Mattei, Saulle, 40033 Casalecchio di Reno (IT); Venturi, Marco, 40133 Bologna (IT)
(72) Inventor: Mattei, Saulle, 40033 Casalecchio di Reno (IT); Venturi, Marco, 40133 Bologna (IT)

(57) **Abstract**

A system of call for aid of a customers (**U**) comprising an s.o.s. portable device (**2**) for a customer (**U**) provided with telecommunication means (**3**) of an alarm signal to rescuers (**P**), and a detecting portable device (**4**) for rescuers (**P**) in order to localize the s.o.s. portable device (**2**), the portable devices (**2, 4**) being provided by localization means (**5**) of the correspondent position comprising: a receiving and elaboration circuit (**6**) of signals of a satellite position system able to provide the position of the portable device (**2, 4**) by means of longitude, latitude and elevation data; additional detection means (**15**) for the detection of the altitude position of the portable devices (**2, 4**); adjustment means associated with the receiving and elaboration circuit (**6**) of signals of a satellite position system to obtain an altitude data with which to carry out the adjustment of the additional detection means (**12**) of the altitude position, the altitude information being the same one for both portable devices (**2, 4**) when they are placed in a same delimited area.

## Description

### Field of invention

The present invention is applicable to the fields of the emergency and of the aid and, in particular, it regards the field of the personal safety devices.

More in detail, the present invention refers to the field of the succour systems for persons in danger situations.

### Background art

Starting from some years, the personal security has become an heartfelt problem for the people. It happens more time to hear, by means of information, news about aggressions and robberies against peoples during their movements.

Such problem often accompanies to another dangerous situation heartfelt by the population and constituted by the possibility to be taken ill.

Therefore, it have been devised and developed, during the last few years, a plurality of devices through which the customers send an s.o.s. signal when he is in a dangerous situation, i.e. when he is under aggression or when he is taken ill.

A first group of devices, as a result of their activation, send an s.o.s. radiofrequency signal generally constituted by an automatic data or voice call to the police enforcements, sanitary staff, purposely organized services, or others. Such devices, in the detail, when activated, find the position in which they are in order to supply this information to the peoples that must carry aid.

Some examples in merit are described in EP 1 447 960, US 5,838,237, WO 2005/047924, US 2007/0063853, WO 2007/004999. In particular, they describe alarm devices in which the detection of the position is executed by the telecommunication net to which they are connected or by means of a circuit for receiving and processing signals of a satellite-based positioning system, i.e. GPS, and/or by means for tracking of a short-range radio-frequency signals.

However, they introduce the disadvantage to not concur to the location of the altitude position when the GPS does not work, as example inside a multistory building.

In order to exceed this disadvantage, in US 2002/0193091 it is described the contextual use of an altimeter and of a GPS in order to concur the detection of the altitude position of the customer who needs aid also when it is inside a multistory building or in places in which such information it is necessary and the GPS fails in giving back it.

However, also this solution does not concur in have the certainty of the individuation of the customer position. In fact, the altimeters, particularly if miniaturized, are subject to lose the calibration and therefore, with the time, they supply an information afflicted by errors that cannot concur the individuate the customer position. An example is the case of a multistory building. As known, every floor measure approximately three meters of height to forehead of an absolute measurement that can be of tens or hundred of meters, a data depends not only from the number of floor of the multistory building, but also from the altitude of the place in which the building is dislocated. If the altimeter is not correctly adjusted, it can give back the indication of a wrong floor, forcing the rescuers to the search the customer.

Moreover, generally the altimeters are of the type at atmospheric pressure that, as known, give back an altitude information conditioned by the atmospheric situation. Therefore the information that they give back can be particularly affected by errors.

A possible solution in order to decrease the margin of error of the altimeter consists, like proposed in JP 2005 337872, in using the information coming from the GPS until possible, in order to execute the calibration of the altimeter.

However, it is known that also the GPS supplies an indication that is subject to error that can prevent to the rescuers to correctly calculate the position of the customer to aid in terms of altitude. In particular, the error is own of the zone in which is the GPS and it plagues all the analogous devices that are placed in the same zone.

### Disclosure of the invention

A general object of the present invention is to overcome the above drawbacks by providing a system for the aid of a customer in danger case that help the rescuers to carry aid quickly.

Particularly, an object of the invention is to avoid that the rescuers is induced in error on the appraisal of the position of the customer to aid in altitude terms.

Obviously, an other object is to give to the customers a system for the aid that, as a result of its activation, succeeds to supply, in the greater possible number of cases, an indication of the position of the customer to the rescuers.

These and other objects, as better explained hereafter, are fulfilled by a system for the aid of customers in dangerous cases as defined in the main claim. The other claims contain detail elements of the invention.

Particularly, the system will be able to comprise at least one s.o.s. portable device, supplied to a customer and provided by telecommunication means of an alarm signal to rescuers, and at least one detecting portable device supplied to the rescuers in order to trace said s.o.s. portable device. Said portable devices could be provided by means for location of the correspondent position comprising:
- at least one receiving and elaboration circuit of signals of a satellite position system able to provide the position of said portable device by means of longitude, latitude and elevation data;
- additional detection means for the detection of the elevation position of said portable device;
- adjustment means associated with said receiving and elaboration circuit of signals of a satellite position system to obtain an elevation data with which to carry out the adjustment of said additional detection means of the elevation position, said elevation position data being equal for each portable device when localized in the same delimited space.

It is therefore obvious that an aspect of the invention consists in the fact that the customer and the rescuers could be supplied of devices comprising a receiving and elaboration circuit of signals of a satellite position system and additional detection means for the detection of the elevation position. These last additional means, moreover, could be adjusted using the receiving and elaboration circuit of signals of a satellite position system.

Advantageously, therefore, as soon as the receiving and elaboration circuit of signals of a satellite position system fails to give back an information on the position of the customer, the additional detection means for the detection of the elevation position give the certainty to obtain an altitude indication the more correspondent to that given back by the aforesaid reception and elaboration circuit.

Moreover, since both devices are supplied by such receiving and elaboration circuit of signals of a satellite position system, even if this last one had, because of erroneous signalling from the satellites, to give back an information affected by errors, it would be supplied in equal measure to the s.o.s. portable device of a customer in a dangerous situation that to the detecting portable device of rescuers when they are in a zone near the customer. This, therefore, concurs to increase to the possibilities of finding quickly the customer also in a multistory building.

Opportunely, the telecommunication means of an alarm signal comprise at least one electronic circuit for transmitting and receiving radiofrequency signals that serves, in the first instance, to transmit the alarm signal.

As it will be looked more in detail, such electronic circuit can be used also in order to obtain an indication of the position of the customer in case the receiving and elaboration circuit of signals of a satellite position system fails in this attempt.

Alternatively, or in combination, they can be also used a direction finder and/or the transmission of a short range radiofrequency signal acts as radio beacon.

### Brief description of the drawings

Further features and advantages of the invention will be more apparent from the detailed description of a few preferred, non-exclusive embodiments of the system for the aid of customers in dangerous cases of the invention, which are described by way of nonlimiting examples with the help of the annexed drawings, in which:

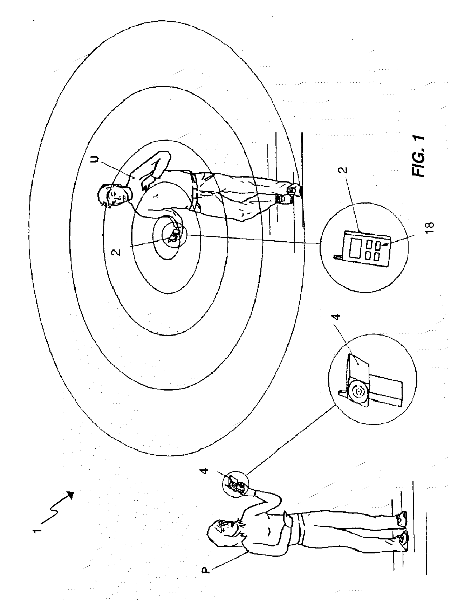

**FIG. 1** shows the system of the invention;
**FIG. 2** shows a detail of the system of the invention in schematic sight;
**FIGG.** from **3** to **5** show operating instants of the portable devices of the invention.

### Detailed description of a preferred embodiment

With reference to the attached figures, a system **1** for the aid of customers **U** in case of danger is illustrated, the system **1** comprising at least one s.o.s. portable device **2** available to a customer **U** and provided by telecommunication means **3** of an alarm signal to send to rescuers **P.**

The system **1** comprises also at least a detecting portable device **4** available to rescuers **P** in order to trace the s.o.s. portable device **2.**

According to one aspect of the invention, both portable devices **2, 4** are provided with localization means **5** of the correspondent position. These last ones, comprise at least one receiving and elaboration circuit **6** of signals of a satellite position system suitable to give back the indication of the position of the correspondent portable device **2, 4** by means of longitude, latitude and altitude information.

According to another aspect of the invention, the indication of the position of the s.o.s. portable device of aid **2** available to the customer **U** is sent to the rescuers from the telecommunication means **3** with the alarm signal.

For this reason, as for another aspect of the invention, the telecommunication means **3** comprise at least one electronic circuit for transmitting and receiving radiofrequency signals **7**.

The localization means **5** comprise, like said above, in a first instance at least the receiving and elaboration circuit **6** of signals of a satellite position system, i.e., as an example, the Global Positioning System (GPS).

Since there are situations in which such circuit **6** does not succeed to supply the indication of the position, as in the event the customer **U** is inside of a multistory building, under trees, under sheds or in similar situations, the localization means **5** comprise alternative means for gain such information.

A first valid alternative is gave by the electronic circuit for transmitting and receiving radiofrequency signals **7.** Since at least one first circuit section **8** of such electronic circuit for transmitting and receiving radiofrequency signals **7** is generally in communication with one or more telecommunication nets, it is possible to find the position of the s.o.s. portable device **2** by triangulation of radiofrequency signals coming from the stations member of the telecommunication nets in whose range is localized the s.o.s. portable device **2.** Particularly, this last one comprises a data elaboration unit **9** operatively connected to the electronic circuit for transmitting and receiving radiofrequency signals **7** in order to elaborate the radiofrequency signals receipt from the stations and to calculate an indication of the position of the customer.

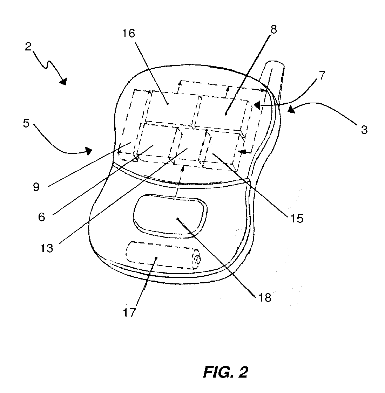

More in detail, if the s.o.s. portable device **2,** and hence the customer **U,** are localized, like shown in fig. 2, in an area **10** that is covered by at least three antennas **A1, A2, A3** of one or more telecommunication networks, the position of the user **U** can be precisely tracked by triangulation.

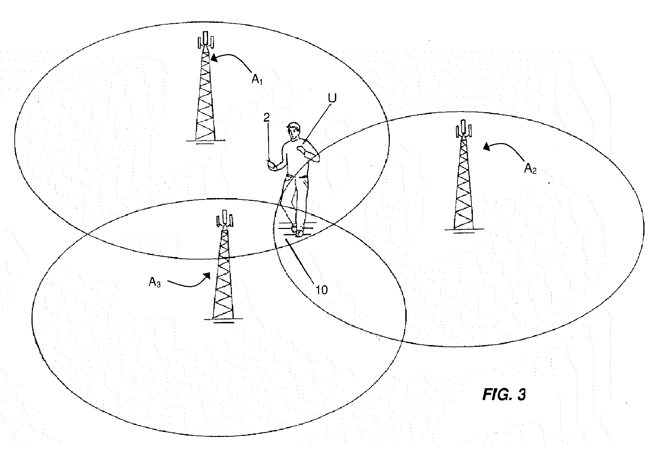

If, as shown in fig. 3, the s.o.s. portable device **2** is localized in an area covered by only two antennas **A1** and **A2,** the area **11** is greater then the previous.

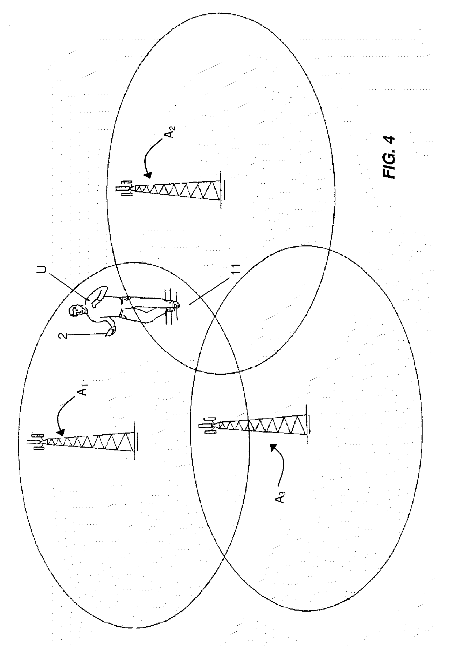

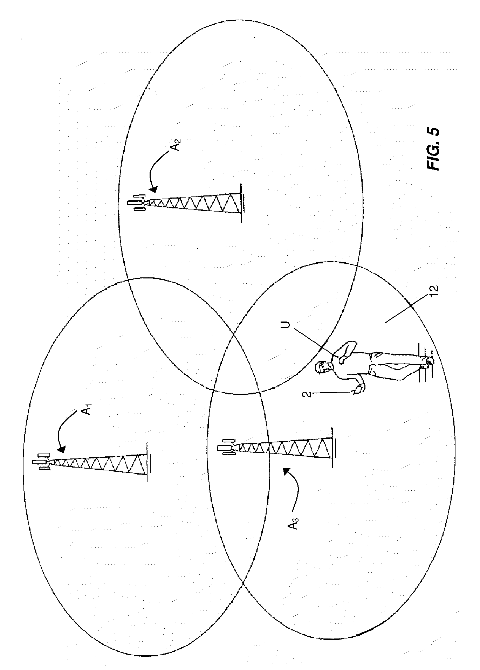

Obviously, if, as shown in fig. 4, the s.o.s. portable device **2** is localized in an area covered by only one antenna **A1,** the area is very wide.

It is obvious that the amplitude of areas **11** and **12** depends also on the type of telecommunication network with which the electronic circuit for transmitting and receiving radiofrequency signals **7** is connected.

In this sense, the electronic circuit may be, for example, of the GSM or UMTS type for mobile phone, or of the type used for various telecommunications networks, such as PAN, LAN, MAN, WAN networks.

Another alternative is constituted from a direction finder **13.** These is a type of receiver who allows to gain the direction from which the emitted radio waves come from a radio-transceiver station.

The principle on which the majority of the goniometry radius systems is based consists in the measurement of the azimut of a radius signal, from the emitter that generates it, to the receiver who identifies it, or, in the measure of the difference of time or phase with which two synchronous transmitted signal reached from two earth or sea stations, towards the receiver. In any case, it is possible to calculate, using the same elaboration unit **8,** the position of the s.o.s. portable device **2.**

It is possible to see that the localization means **5,** that are alternative to the receiving and elaboration circuit **6** of signals of a satellite position system, can fail to supply the altitude position of the s.o.s. portable device **2.** As known, such information has the same importance of the latitude and the longitude information. It is known, in fact, the case in which the user **U** call for aid from a multistory building.

Therefore, according to another aspect of the invention, every portable device **2, 4** comprises also additional detecting means **15** of the altitude data.

These additional detecting means **15** generally are constituted by an atmospheric pressure altimeter. However, as anticipated, an altimeter of this type is subject to lose the calibration or to supply wrong indications since it is subjected to the local atmospheric conditions.

In order to exceed such drawback, according to the invention both portable devices **2** and **4** comprise adjusting means associated to the receiving and elaboration circuit **6** of signals of a satellite position system in order to have the information of altitude with which to carry out a calibration of the additional detecting means **15** of the altitude data.

Particularly, until the receiving and elaboration circuit **6** of signals of a satellite position system gives back valid data, they are the position information that it supplies to being inserted in the alarm signal. Contextually, it is executed the calibration of the additional detecting means **15** using the altitude information. When the receiving and elaboration circuit **6** of signals of a satellite position system fails to supply the indication of the position, the additional detecting means **15** give the altitude indication with the certainty that it is, at least initially, aligned with the precedent value supplied by the receiving and elaboration circuit **6** of signals of a satellite position system. Certainly, in short time the additional detecting means **15** will not be subject to the loss of the calibration and the evolution of the atmospheric situation could not provoke an error on the detection of the altitude.

About the calibration, the adjusting means can have different embodiments. Due to the presence of the data elaboration unit **9,** the simplest embodiment is of the software type. Particularly, the data elaboration unit **9** executes, at regular time instants, a detection of the altitude data by the receiving and elaboration circuit **6** of signals of a satellite position system and it associates such value to the value detected by the additional detecting means **15.**

However, it is known that, because of erroneous signalling from the satellites, the receiving and elaboration circuit **6** of signals of a satellite position system could give back an information affected by error for the area in which it is placed. In this event, since system **1** comprises the s.o.s. portable device **2** and the detecting portable device **4,** the information on hand of both devices will be affected bt the same error when they are placed in the same area and therefore this error will not have any negative effect. In other words, the altitude information that have the rescuers **P,** even if affected by error, will be the same detected by the s.o.s. portable device **2** of the customer.

Then if follow that the system **1** of the invention concurs to increase to the possibilities to find quickly the customer **U** also in a multistory building because the customer **U** and the rescuers **P** are supplied by the portable devices **2, 4** both at least provided of one receiving and elaboration circuit **6** of signals of a satellite position system and of detecting additional means **15** of the altitude data adjustable with the same information detected by the respective receiving and elaboration circuit **6** of signals of a satellite position system. On the contrary, in the prior art the rescuers **P** have only a deduced position of the customer **U** calculated by the data received from the device of the customer **U,** so affected by error.

According to another aspect of the invention, in case the localization means **5** does not concur to obtain the exact position of the customer **U,** the electronic circuit for transmitting and receiving radiofrequency signals **7** comprises also a second circuit section **16** suitable to transmit and receive short range radiofrequency signals.

Such signals are used substantially as a radio beacon. Particularly, the cover area of such signals is limited to few hundreds of meters or to some kilometres due to law dispositions, to save the power supply of the portable device and to the possible presence of obstacles for the propagation of radiofrequency signals.

According to said characteristic, the detecting portable device **4** will be supplied of a short range radiofrequency signal receiver so that the rescuers **P** can find the customer **U.**

The second circuit section **16** with the reception and transmission of short range radiofrequency signals have also another use. In case the s.o.s. portable device **2** is not under cover of any telecommunication network, the short range radiofrequency signal can be used as alternative way to call for aid. If in the short range there is another device in a position to picking up such signal, it can concur to rebroadcast the call for aid.

More in detail, the second circuit section **16** can work on an emergency band which, in Italy, may be around 457 KHz. Other useful bands are the Italian CB band, which is around 2.4 GHz and the bands around 5,5-5,8 GHz.

It is obvious that at least the s.o.s. portable device **2** can have any combination of the localization means **5** previously described in order to assure the best probability for the location of the customer **U.**

Analogous, also the telecommunication means **3** of an alarm signal can be of various type. **A** particular embodiment, usable in combination with those previously described, provides the use of acoustic and/or luminous emitters in order to attracting the attention of peoples near the customer **U.**

According to an aspect of the invention, the alarm signal comprises at least a unique identification code of the customer **U.** In such a way it is possible, for the rescuers **P,** to not only know the name of the customer **U** which is calling for aid, but also to have more detailed information thereof.

For example, can be useful to know, in the moment of the reception of the call for aid, of the biometrical data of the customer. Therefore, the s.o.s. portable device 2 to comprises detecting means **17** of such biometrical data in order to transmit them by means of the alarm signal.

Another aspect of the invention regards the activation of the call for aid by the described s.o.s. portable device **2.** It typically happens by means of at least one push-button **18** that can be disposed on the same container of the s.o.s. portable device **2** or, as for alternative embodiments, in a different container connected with the s.o.s. portable device **2** by means of radiofrequency signal, for example of the Bluetooth type.

Opportunely, the s.o.s. portable device **2** of the invention can also be activated from remote by means of an activation signal. In some situations, as an example in the event of an insane, in which the customer cannot activate the s.o.s. portable device. In such cases, therefore, it can be activated by remote in order to allow a localization of the customer **U,** eventually with the authorization of the competent authorities.

Also, s.o.s. portable device **2** may be coupled to a second identical device that is designed to come into operation in case of failure of the former.

This is particularly advantageous in case of assaults, when the alarm device can be damaged by the assaulter. In this case, the second s.o.s. portable device comes into operation and keeps on transmitting the distress signal.

Due to the above, the system for aid of customers of the invention fulfill all the intended objects and, particularly, overcome the drawbacks of the prior art concurring to the rescuers to carry aid quickly.

Particularly, the inventive object of providing an alarm device that allows the user to transmit a distress signal to the relevant bodies as quickly as possible is fulfilled by the provision that the alarm signal is activated by simply pressing a pushbutton.

The system of the invention concurs to avoid that the rescuers are induced in error in the appraisal of the position of the customer in altitude terms.

It is also meet the object to give to a customer a system for aid that, as a result of its activation, succeeds to supply in the greater possible number of cases an indication of the position of the customer to the rescuers.

The system of this invention is susceptible of a number of changes and variants, within the inventive principle disclosed in the appended claims. All the details may be replaced by other technically equivalent elements, and the materials may be different depending on different needs.

While the system has been described with particular reference to the accompanying figures, the numerals referred to in the disclosure and claims are only used for the sake of a better intelligibility of the invention and shall not be intended to limit the claimed object in any manner.

## Claims

1. A system of call for aid of a customers (**U**) in a dangerous situation comprising at least one s.o.s. portable device (**2**) for a customer (**U**) provided with telecommunication means (**3**) of an alarm signal to rescuers (**P**), and at least one detecting portable device (**4**) for rescuers (**P**) in order to localize said s.o.s. portable device (**2**), said portable devices (**2, 4**) being provided by localization means (**5**) of the correspondent position comprising:
- at least one receiving and elaboration circuit (**6**) of signals of a satellite position system able to provide the position of said portable device (**2, 4**) by means of longitude, latitude and elevation data;
- additional detection means (**15**) for the detection of the altitude position of said portable devices (**2, 4**);
- adjustment means associated with said receiving and elaboration circuit (**6**) of signals of a satellite position system to obtain an altitude data with which to carry out the adjustment of said additional detection means (**12**) of the altitude position, said altitude information being the same one for both portable devices (**2, 4**) when they are placed in a same delimited area.

2. A system as claimed in claim 1 **characterized in that** said communication means (**3**) of an alarm signal comprise at least one electronic communication circuit (**7**) of radiofrequency signals.

3. A system as claimed in claim 2 **characterized in that** at least said s.o.s. portable device (**2**) comprises at least one data elaboration unit (**9**) operatively connected to said electronic communication circuit (**7**) of radiofrequency signals, said data elaboration unit (**9**) being suitable also to obtain position data of said portable device (**2**) by means of the radiofrequency communications between at least one first circuit section (**8**) of said electronic communication circuit (**7**) of radiofrequency signals and one or more telecommunication networks.

4. A system as claimed in claim 2 or 3 **characterized in that** said alarm signal comprises an univocal identification code of the customer.

5. A system as claimed in anyone of the claims from 2 to 4 **characterized in that** said s.o.s. portable device (**2**) comprises detection means (**17**) of biometrical data of the customer to transmit said biometrical data by means of said alarm signal.

6. A system as claimed in anyone of the preceding claims **characterized in that** at least said s.o.s. portable device (**2**) comprises at least one direction finder.

7. A system as claimed in anyone of the preceding claims **characterized in that** said additional detection means (**15**) of the altitude data are constituted by a pressure altimeter.

8. A system as claimed in anyone of the preceding claims **characterized in that** said s.o.s. portable device (**2**) comprises acoustic and/or light emitters.

9. A system as claimed in anyone of the preceding claims **characterized in that** said electronic communication circuit (**7**) of radiofrequency signals of said s.o.s. portable device (**2**) comprises at least one second circuit section (**16**) suitable to communicate a short range radiofrequency signal, said detecting portable device (**4**) comprising a corresponding circuit section able to receive and localize said short range radiofrequency signal.
